# EUROPEAN PATENT SPECIFICATION

(11) **EP 1 619 823 B1**
(45) Date of publication and mention of the grant of the patent: **06.04.2016**
(21) Application number: 05106025.9
(22) Date of filing: 01.07.2005
(51) Int. Cl.: H04L 9/14, G06Q 10/00, H04L 29/06

(54) **Method and apparatus for securing user-specific data in wireless communications**
Verfahren und Vorrichtung zur Sicherung teilnehmerspezifischer Daten in einem drahtlosen Kommunikationssystem
Procédé et dispositif de sécuriser de données spécifiques d'un utilisateur dans un système de communication sans fil

(30) Priority: 02.07.2004 GB 0414868
(43) Date of publication of application: 25.01.2006
(73) Proprietor: Vodafone Ireland Limited, Dublin 18 (IE)
(72) Inventor: MCQUILLAN, PETER, 18, DUBLIN (IE); O'KANE, FINBARR, 18, DUBLIN (IE)
(74) Representative: Gates, Marie Christina Esther

(56) References cited:
- WO-A-02/102009
- BADRA M ET AL: "A new Secure Session Exchange Key Protocol for Wireless Communications" PERSONAL, INDOOR AND MOBILE RADIO COMMUNICATIONS, 2003. PIMRC 2003. 14TH IEEE PROCEEDINGS ON SEPT. 7-10, 2003, PISCATAWAY, NJ, USA,IEEE, vol. 2, 7 September 2003 (2003-09-07), pages 2765-2769, XP010678135 ISBN: 0-7803-7822-9

## Description

### Field of the Invention-

The present invention relates to a system and method for securing distributed data. More particularly, the present invention relates to securing user-specific distributed data against tamper.

### Background of the invention

Distributed systems are known in which users access personal account information located at a remote server and which they may alter or update. Such systems include for instance Internet-based banks, at which said users may hold a current or savings account and from which or into which they may transfer money. Such systems may also include the Internet site of any personal service provider, such as a mobile phone service provider, at which said users can manage their respective mobile phone subscription details.

A proportion of such distributed systems are further known, in which users can access common and user-specific data with a plurality of personal devices, the respective memory and processing means of which can vary to a fairly large extent. Indeed, users may edit user-specific data, for instance in order to effect the purchase of an additional services, with using either a personal computer to access HTML (Hyper-Text Mark-up Language)-encoded Internet site pages or a mobile phone handset to access WML (Wireless Mark-up Language)-encoded Internet site pages. The user-specific data accessed is identical, as it is centrally stored at said remote server, but the format in which it is broadcast varies according to the respective processing capabilities of the user device and its capability-dependent browser protocol and application.

A common functionality of said browser applications is to output said broadcast data at the user's choice either in processed form, e.g. as a HTML Internet page, or in code form, e.g. as a text file containing HTML instructions and values, the processing of which by said application outputs said Internet page. In the context of the above prior art, a known problem exists in that the purpose of some distributed, user-specific data may be identified by a user within the unprocessed text file regardless of the protocol used, the tampering of which may result in an undue gain by said user to the detriment of the service provider.

For example, if said user observes a promotional offer by her mobile phone service provider of 100 additional SMS (Short Message Service) text messages per month for the value of $10 on an Internet page, said user may successfully identify the above "100 SMS" and "$10" values within a character string of the corresponding text file, e.g. "sms-100-10". Said user may then modify said values to "200 SMS" and "1$" with editing said string to "sms-200-1", reprocess said edited text file locally and then signify her acceptance of the edited offer with providing appropriate input (e.g. clicking a "Confirm" button on the locally-reprocessed page), whereby said service provider is defrauded when its terminal processes and validates the above user input.

Alternatively, said user may receive the above promotional offer individually, based upon user-specific data, such as subscription details, service usage and the like, but may wish for friends to benefit from the same offer to which they may not be individually entitled, being entitled for instance to 100 additional SMS for $20 instead. Again, said user successfully identifies the above "100 SMS" and "$10" values within the "sms-100-10" string of the corresponding text file and may then notify said string to said friends, who may then edit their user-specific version of the string in the text file, e.g. "sms-100-20", with replacing the "$20" value with "$10" as described above.

Service providers have therefore increasingly resorted to securing distributed data with encrypting data messages containing text strings therein, such as a HTML page distributed as HTML code to be processed for display by a browser application, which are prone to dishonest or malicious user manipulation, such manipulation being colloquially known as "hacking".

For example, document WO03/101069 discloses a system and method of securing HTTP applications, which overcomes the limitations of conventional firewalls arising from their operating at network layer and/or transport layer levels, but not at the application layer level at which network ports authorised for external access by the firewall may be exploited, as well as overcoming the onerous alternative of source code-checking to identify and close security gaps. In *"A new Sew Secure Session Exchange Key Protocol for Wireless Communications",* Badra *et al.* proposes a protocol for securing data exchanges between a client such and a server connected to one another via a WAP gateway.

However, known encrypting techniques are commonly applied to entire data messages and not limited to portions of same, such as for instance applied to message recipient - specific data within a composite message. An example of encrypting techniques applied to entire data messages may be found in document WO 02/102009. Known encrypting techniques can dramatically increase the size of the messages or text strings to be sent over the network and processed by the recipient device, which can be a distinct disadvantage, having regard to the increasingly - diverse configurations of memory and processing means of popular user devices, particularly portable user devices such as the above mobile phones, and the increasingly - disparate bandwidths of the networks over which those communicate data.

### Obiect of the Invention

An apparatus is therefore required, in which distributed data is secured against user tampering regardless of the user device used to distribute and process said data. It would be advantageous for this apparatus to dynamically adjust the size of any encrypted text therein to compensate for limited bandwidth and/or memory means and/or processing means.

### Summary of the Invention

The invention is defined by the independent claim. According to an aspect of the present invention, an apparatus for securing distributed data is provided, comprising network-connected user terminals, each of which includes at least processing means, memory means and communicating means, wherein said memory means stores generic data, user-specific data and instructions, whereby at a first of said user terminals said processing means is configured by said instructions to obtain the type of distributed data processing protocol of a second user terminal, encode said user-specific data according to said protocol type, encrypt said encoded data with an encryption algorithm, broadcast said encrypted data to said second user terminal by way of said communication means, receive remote user input data broadcast from said second user terminal in response to receiving said encrypted data and decrypt and compare said remote user input with said stored user-specific data.

According to another aspect of the present invention, a method of securing distributed data is provided, wherein said distributed data includes generic and user-specific data and said method comprises the steps of obtaining the type of distributed data processing protocol of a second user terminal at a first user terminal, encoding said user-specific data according to said protocol type, encrypting said encoded data with an encryption algorithm, broadcasting said encrypted data to said second user terminal by way of said communication means, receiving remote user input data broadcast from said second user terminal in response to receiving said encrypted data and decrypting and comparing said remote user input with said stored user-specific data.

According to yet another aspect of the present invention, a computer system programmed to execute stored instructions is provided such that in response to said stored instructions said system is configured to obtain the type of distributed data processing protocol of a remote user terminal, encode stored user-specific data according to said protocol type, encrypt said encoded data with an encryption algorithm, broadcast said encrypted data to said remote user terminal by way of communication means, receive remote user input data broadcast from said remote user terminal in response to receiving said encrypted data and decrypt and compare said remote user input with said stored user-specific data.

In an embodiment of the present invention, said user-specific data may be encoded as a string of characters, the size of which varies in proportion with the bandwidth of said network, the size of said memory means or the capacity of said processing means of said second terminal.

Preferably, said instructions may generate further securing variables to be included in said string of characters, such as a random value or a timestamp or a checksum of the character string or a combination thereof

Said encrypted user-specific data may be broadcast as a meaningless string of alphanumerical characters, within data processed according to said protocol for output on a display. Said received remote user input data may include said encrypted user-specific data.

In another embodiment of the present invention, said processing means may be further configured by said instructions to encode said user-specific data by way of at least one look-up table.

Said look-up table is desirably a nybble mapping table. Said encoded string of characters preferably includes binary characters, each of which requires four bits of memory storage space.

In a further embodiment of the present invention, at least one encryption key of said encryption algorithm is based on a portion of said user-specific data.

In yet another embodiment of the present invention, said decrypting instructions further include removing said checksum of said character string.

Preferably, said second terminal is wirelessly connected to said network.

### Brief Description of the Drawings

The invention will be better understood upon consideration of the following detailed description and the accompanying drawings, in which:
*Figure 1* shows a preferred embodiment of the present invention in an environment comprising a plurality of network-connected user terminals;
*Figure 2* provides an example of a user terminal shown in *Figure* 1, which includes memory means, processing means and communicating means;
*Figure 3* details the processing steps according to which the device of *Figures 1* and 2 operates, including a step of processing distributed data;
*Figure 4* illustrates the contents of the memory means shown in *Figure 2* during the data processing step shown in *Figure 3**;*
*Figure 5* shows an example of the distributed data of *Figure 4*;
*Figure 6* provides an example of a user terminal located at the service provider shown in *Figure 1**,* which includes memory means, processing means and communicating means;
*Figure 7* details the processing steps according to which the service provider terminal of *Figures 1* and 8 operates, including steps of encoding user-specific data, decoding user input data and comparing said decrypted data;
*Figure 8* illustrates the contents of the memory means of the terminal of *Figures 1**,* *8* and 9 according to the present invention, including an application, a database and at least one look-up table;
*Figure 9* further details the application shown in *Figure 8**;*
*Figure 10* provides an example of the database shown in *Figure 8**;*
*Figure 11* provides an example of the look-up tables shown in *Figure 8**;*
*Figures 12A* and *12B* further detail the step of encoding user-specific data shown in

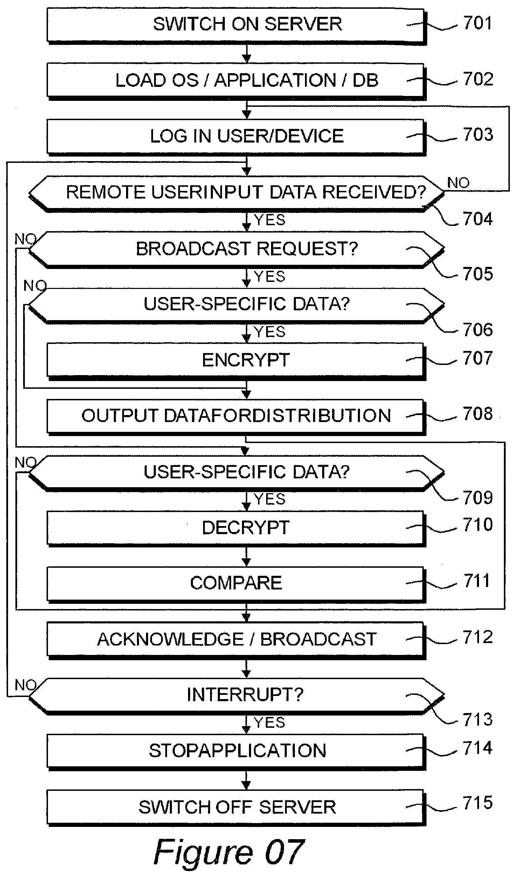

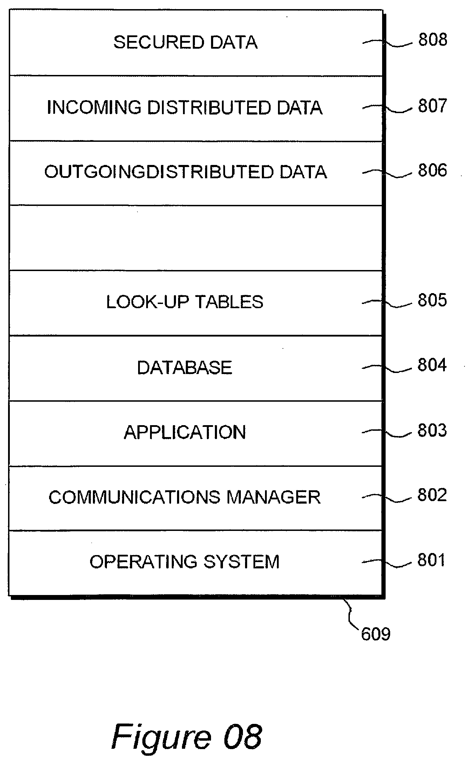

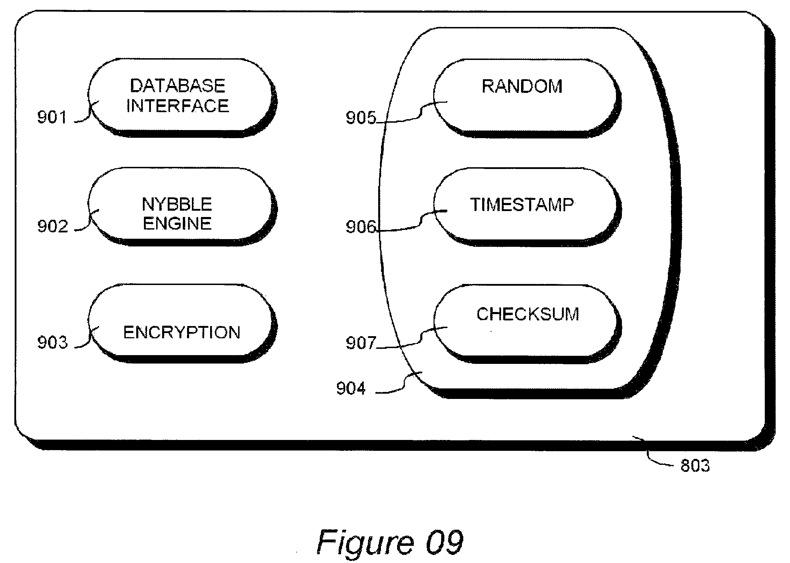

*Figure* 7 with the application shown in *Figures 8* and *9* and the look-up tables shown in
*Figure 8* and *11**;*

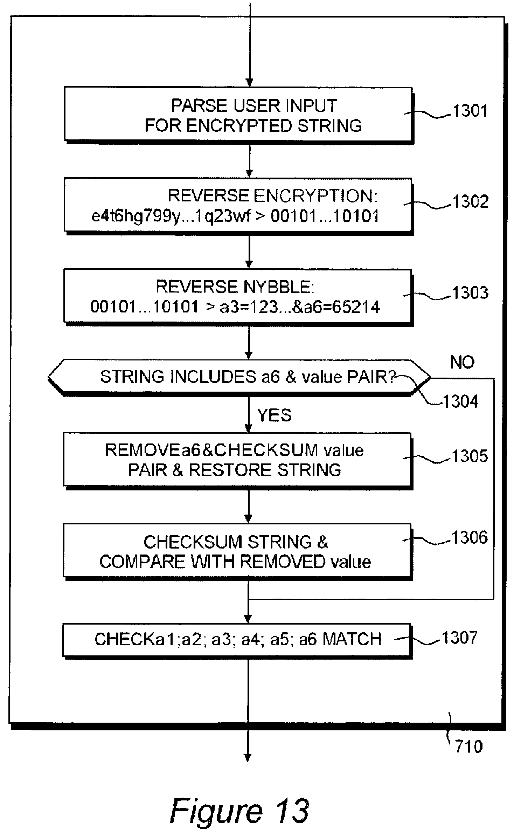

*Figure 13* further details the step of decrypting user input shown in *Figure 7**;*

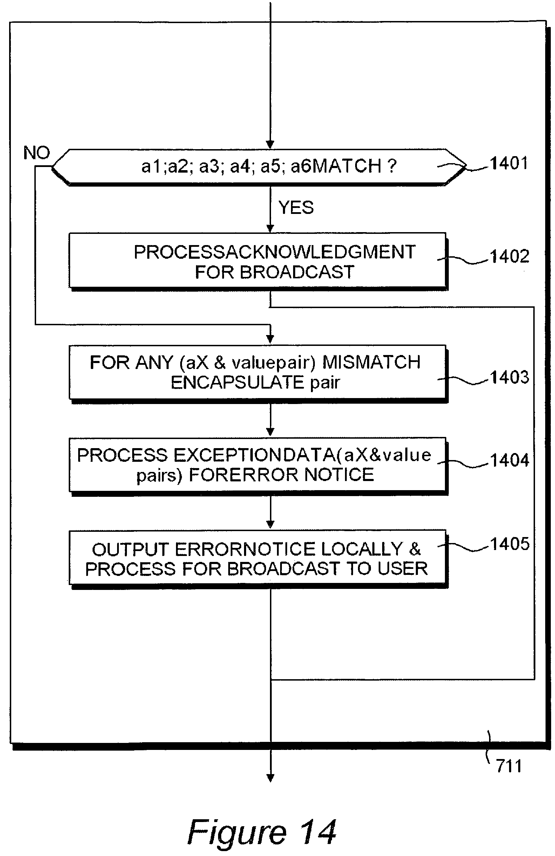

*Figure 14* further details the step of comparing decrypted user input shown in *Figure 7**;*

### Detailed Description of the Drawings

The words "comprises/comprising" and the words "having/including" when used herein with reference to the present invention are used to specify the presence of stated features, integers, steps or components but does not preclude the presence or addition of one or more other features, integers, steps, components or groups thereof.

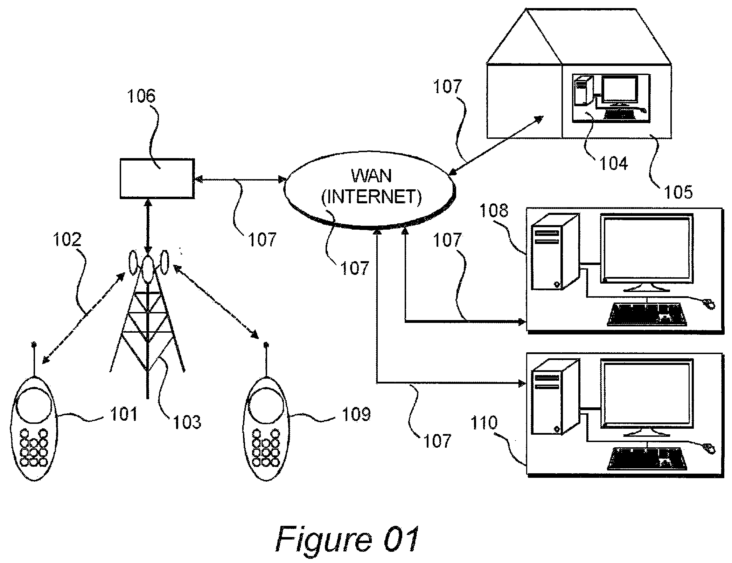

A preferred embodiment of the present invention is shown in an environment in Figure 1. A plurality of network-connected user terminals is shown, which first includes user devices such as a mobile telephone handset **101.** Said handset **101** is configured with wireless telecommunication emitting and receiving functionality, such as over a cellular telephone network configured according to either Global System for Mobile Communication ('GSM') or General Packet Radio Service ('GPRS') network industry standards. Handset **101** receives or emits voice and/or text data encoded as a digital signal over wireless data transmission **102,** wherein said signal is relayed respectively to or from said handset **101** by the geographically-closest communication link relay **103** of a plurality thereof. Said text data is preferably encoded as a WML message, although it will be readily understood by those skilled in the art that the present invention is not limited thereto and may indeed include any other such protocol, depending upon the handset operating system and processing capacity, which will be further described below, for instance a XHTML, VFML message (VodaFone Mark-up Language, licensed by the present assignee) or VCML message (Vodafone Content Mark-up Language, licensed by the present assignee).

Said plurality of communication link relays allows said digital signal to be routed between handset **101** and its intended recipient or from its remote emitter, in the example terminal **104** of mobile phone service provider **105,** by means of a remote gateway **106.** Gateway **106** is for instance a communication network switch coupling digital signal traffic between wireless telecommunication networks, such as the network within which wireless data transmission **102** takes place, and a wide area network (WAN) **107,** an example of which is the Internet. Said gateway **106** further provides protocol conversion if required, for instance as handset **101** uses Wireless Application Protocol to distribute data to and optionally receive from terminal **104,** which is itself only connected to the WAN **107.**

The user of handset **101** may also have the use of a terminal **108** connected to said WAN **107** and configured with a different distributed data processing protocol, wherein said data is preferably encoded as a HTML message, although it will be readily understood by those skilled in the art that the present invention is not limited thereto and may indeed include any other such protocol, depending upon the device operating system and processing capacity, which will be further described below, for instance a DHTML (Dynamic HyperText Mark-up Language) or ASP (Active Server Page) message. Thus, the potential exists for data exchange between any of handset **101,** terminals **104** and **108,** by way of wireless data transmission **102** interfaced by gateway **106** and the Internet **107.**

In the preferred embodiment of the present invention, many other user terminals are connected to said wireless network and WAN **107,** whereby the potential exists for likewise data exchange between handset **101,** terminals **104** and **108** and the respectively wireless- and WAN-connected communication devices **109, 110** of another user.

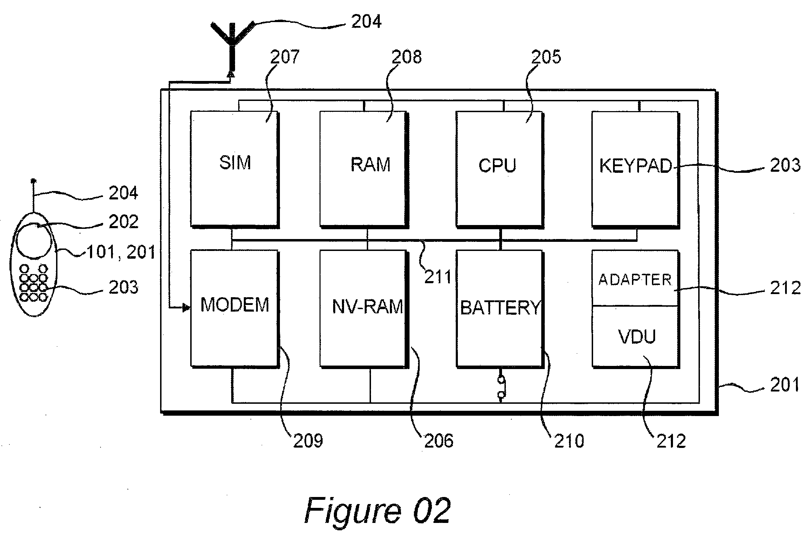

An example of the user terminal **101** shown in Figure 1 is further detailed in Figure 2. Terminal **101** is configured as a data processing unit **201,** and equipped with data outputting means such as video display unit (VDU) **202,** data inputting means such as a keypad **203** and data inputting/outputting means such as a wireless connection **102** amplified by an aerial **204.**

Within data processing unit **201,** a central processing unit (CPU) **205** provides task co-ordination and data processing functionality. Instructions for the CPU **205** are stored in a non-volatile random access memory (NVRAM) **206** and local user-specific data in a static memory chip **207** generally known as a SIM card. Random access memory (RAM) **208** facilitates storage of runtime data, such as distributed and user input data. WAN connection **107** is provided by way of a modem **209** as a wireless connection **102.** A resident, rechargeable battery **210,** which may be of a nickel-cadmium (NiCd) type or another, provides power to all of the above components. All of the above devices are preferably connected to a data input/output bus **211.** A video adapter **212** receives CPU instructions over said bus **211** for outputting processed data to VDU **202.**

In the embodiment, data processing unit **201** is of the type generally known as a mobile telephone handset, but may equally be any device configured with processing means, output data display means, memory means, input means and wired or wireless network connectivity. Any such device may include, but is not limited to, a Portable Digital Assistant (PDA) such as a Palm m505® manufactured by PalmOne® Inc. of Milpitas, California, USA; a Portable Digital Computer (PDC) such as an IPAQ® manufactured by the Hewlett-Packard® Company of Palo Alto, California, USA; or even a mobile phone such as a Nokia 9500 manufactured by the Nokia® Group in Finland, all of which are generally configured with processing means, output data display means, memory means, input means and wired or wireless network connectivity.

User terminals **108, 110** have significantly better processing means than handsets **101, 109,** the general architecture of which mirrors more closely that of server **104** than that of handset **101,** which is further described hereinbelow and to which a useful but not limitative reference may be made if required.

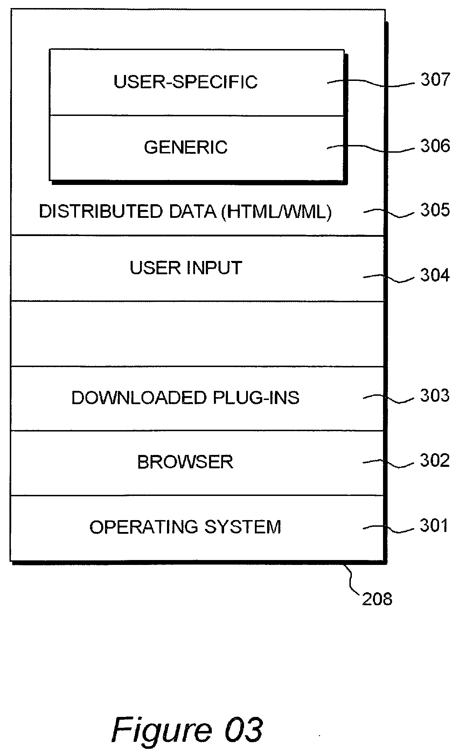

The contents of RAM **208** are shown in Figure 3 when handset **101** is in operation and receives or broadcasts distributed data. Subsequently to its loading from NVRAM **206** further to powering up the device, memory **208** first contains an operating system **301** embodying the set of CPU instructions which processes local data, understood as distributed data and user input data.

Preferably, operating system **301** is configured to process local user input data as detailed further below, packet and broadcast said data or receive distributed data with modem **209,** wherein said distributed data is for instance encoded in a WML text file. Memory **208** also contains a browser application **302,** embodying the set of CPU instructions according to which distributed data in the form of a WML text file is processed for output to display adapter **212** then VDU **202** as an Internet page.

Memory **208** may optionally include one or a plurality of network-distributed plug-ins **303,** which are supplemental sets of CPU instructions providing distributed data processing functionality not afforded by browser **302,** but upon which they rely for function activation and thus downloaded on an as-needed basis. In the example, one such plug-in **303** is stored and the user of handset **101** has no access to the code, data and processing parameters thereof.

User input is shown at **304** and includes signals input by way of keypad 203, as key activation. Distributed data is shown at **305,** which includes both data downloaded from server **104** over WAN connection **107** and local user input data processed for broadcasting to said server **104** over said WAN **107.** Said data includes generic data 306 and user-specific data **307,** wherein said generic data **306** includes for instance presentation formatting data, e.g. layout, colours and text font and said user-specific data **307** includes for instance personal user account details.

The respective random access memories of user terminals **108, 110** are vastly larger than handsets **101, 109.** The respective contents of said random access memories of said user terminals **108, 110** are nonetheless identical in terms of local user input data **304,** distributed data **305,** generic data **306** and user-specific data **307** insofar as the present description is concerned, although data is preferably distributed in the form of a HTML text file.

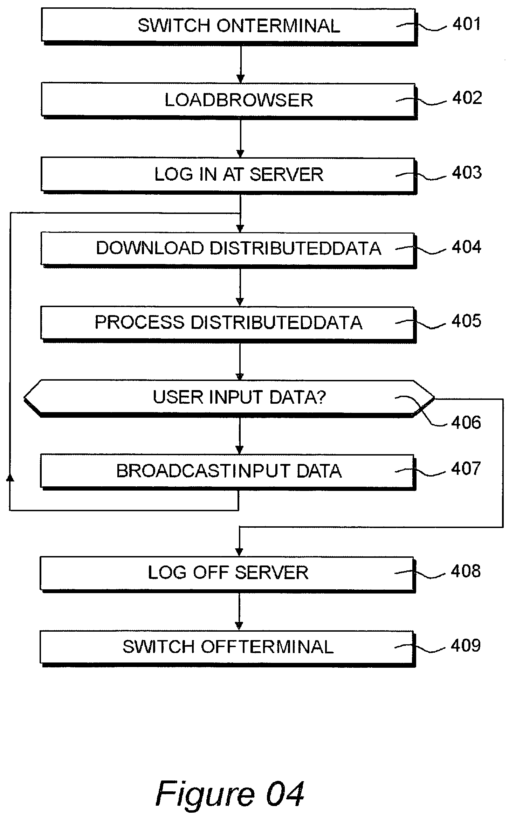

The processing steps according to which any of handsets **101, 109** and terminals **108, 110** operate, are described in Figure 4. At step **401** the device is switched on, whereby its operating system **301** is loaded in memory **208.** At step **402,** the distributed data processing application **302** is also loaded in memory **208,** which is a browser, for instance Internet Explorer manufactured and licensed by the Microsoft Corporation of Redmond, California, in the case of terminals **108, 110.**
At the following step **403,** the device connects to the network **107** by means of its modem **209,** and logs in at terminal **104** of service provider **105,** which is a network server further described hereinbelow, for instance with providing a user name and password by way of keypad **203.**

At step **404,** the network- and server-connected device downloads distributed HTML or WML text data **305** into memory **208,** which may include generic data **306** and user-specific data **307.** Similarly, said device downloads distributed JavaScript CPU instructions **303** if required, which is known to those skilled in the art as a plug-in. At step **405,** CPU **205** processes said downloaded data according to both browser **302** instructions and plug-in **303** instructions for output to display **202,** whereby the HTML or WML text data is output as a processed Internet page.

A question is asked at step **406,** as to whether the user has provided input data **304** by means of keypad **203,** for instance to the effect of requesting further distributed data to be downloaded, i.e. a different Internet page, or to call a remote function at server **104,** i.e. confirming acceptance of a purchase or an offer. If the question of step **406** is answered positively, the device broadcasts said user-input data at step **407** by means of modem **209** to server **104** over network **107** and control proceeds back to step **404,** such that said requested further distributed data may be downloaded and processed or a purchase or order confirmation received from said server.

Alternatively, the question of step **406** is answered negatively and the user may then want to cease operating the device, whereby said device may log-off server **104** at step **408** and be eventually switched off at step **409.**

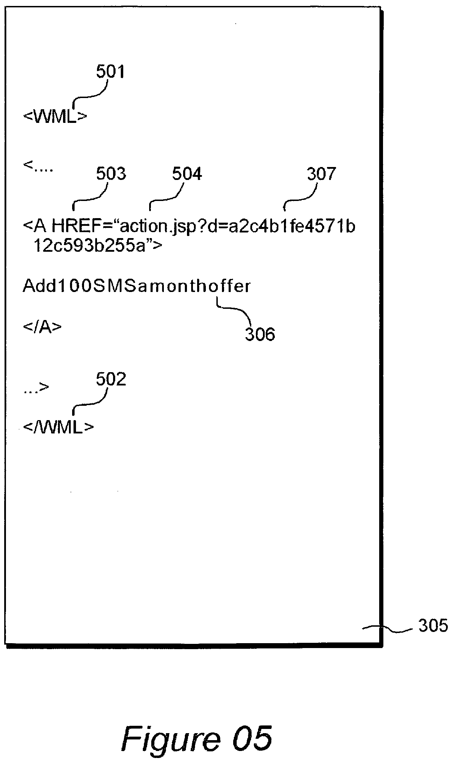

An example of the distributed text data **305** downloaded according to step **404** and processed according to step **405** is shown in Figure 5, by way of pseudo code for not obscuring the present description unnecessarily.

Data **305** takes the form of sequential opening statements which are calls to particular processing functions of browser **302,** must syntaxically be closed in reverse order (last opened - first closed and so on) and include processing values therebetween. In the example, said statements are shown listed for clarity, but the data is in effect one single string of statements and values in distributed form.

The first statement **501** preferably declares the distributed data processing protocol which, in the example, is Wireless Mark-up Language, and is therefore the last closed at **502.** Further statements then define the appearance and information contents of the Internet page, when processed by browser **302,** which is known to those skilled in the art as "look and feel". Statements and processing values may be generic data **306,** user-specific data **307** or a combination thereof.

According to the present invention, distributed data corresponding to user-specific data **307** prone to user tampering is rendered meaningless [to the end user] in its unprocessed form with appropriate encoding and encryption but is displayed in user-selectable form by way of generic data 306 when processed by browser **302.** In the example, after logging in at step 403, handset **101** downloads an Internet page from the user's mobile phone service provider **105** containing both generic and user-specific data **306, 307,** in which a promotional bundle of an additional one hundred SMS text messages for an additional ten (US) dollars per month, is offered.

Statement **503** thus declares a user-selectable portion of display **20** having a "add 100 SMS a month bundle" label, the selection of which by said user calls a function of plug-in **303** shown at **504** to broadcast user-specific data **307** back to server **104** in order to confirm the user's acceptance of the offer.

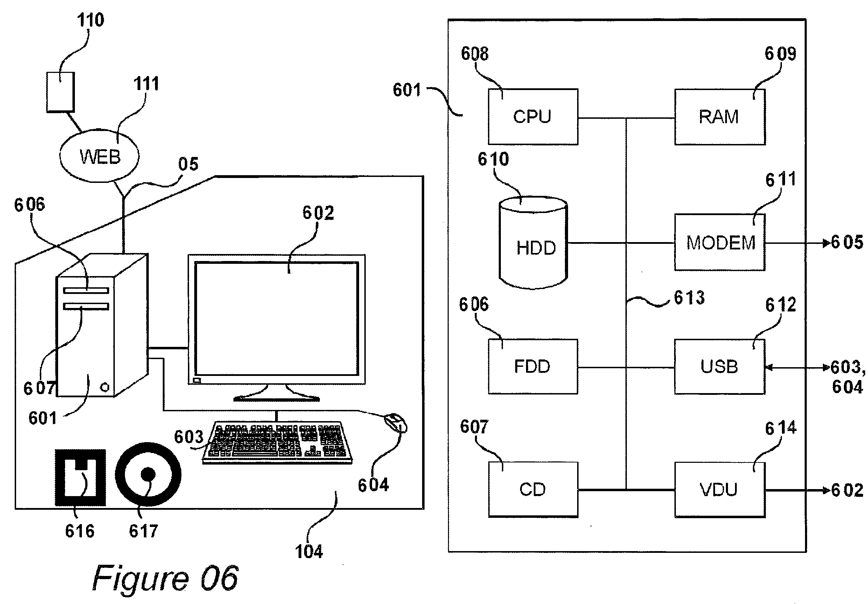

An example of the terminal **104** at the service provider **105** shown in Figure 1 is provided in Figure 6. Terminal **104** is a computer terminal configured with a data processing unit **601,** data outputting means such as video display unit (VDU) **602,** data inputting means such as a keyboard **603** and a pointing device (mouse) **604** and data inputting/outputting means such as WAN connection **605,** magnetic data-carrying medium reader/writer **606** for reading from and writing to magnetic data-carrying media **616,** and optical data-carrying medium reader/writer **607** for reading from and writing to optical data-carrying media **617.**

Within data processing unit **601,** a central processing unit (CPU) **608,** such as an Intel Pentium 4 manufactured by the Intel Corporation, provides task co-ordination and data processing functionality. Instructions and data for the CPU **608** are stored in main memory **609** and a hard disk storage unit **610** facilitates non-volatile storage of data and several software applications. WAN connection **605** is provided by way of a modem **611** as a wired connection to the Internet **107.** A universal serial bus (USB) input/output interface **612** facilitates connection to the keyboard and pointing device **603, 604.** All of the above devices are connected to a data input/output bus **613,** to which said magnetic data-carrying medium reader/writer **606** and optical data-carrying medium reader/writer **607** are also connected. A video adapter **614** receives CPU instructions over said bus **613** for outputting processed data to VDU **602.**

In the embodiment, data processing unit **601** is of the type generally known as a compatible Personal Computer ('PC'), but may equally be any device configured with processing means, output data display means, memory means, input means and wired or wireless network connectivity.

The processing steps according to which server **104** of service provider **105** operate, are described in Figure 7. At step **701** the server is switched on. At the next step **702,** an operating system, an application and a database are loaded in memory **609,** all of which will be further described hereinbelow. Preferably, server **104** connects to network **107** at the same step **702.**

At step **703** server **104** logs-in remote, network-connected user terminals, such as any of handsets **101, 109** and terminals **108, 110,** for instance with comparing received user name and password combinations with corresponding data stored in the database loaded at step **702.**

At step **704,** a first question is asked as to whether remote user input data has been received over network **107.** If the question of step **704** is answered negatively, control is returned to step **703** wherein server **104** continues logging-in user terminals as these become network connected according to step **403.** Alternatively, the question of step **704** is answered positively, whereby a second question is asked at step **705,** as to whether user input data is a broadcast request.

If the question of step **705** is answered positively, a third question is asked at step **706,** as to whether said broadcast request is for user-specific data **307.** If the question of step **706** is answered positively, said requested user-specific data **307** is encoded and encrypted according to the present invention at the next step **707,** whereby said encrypted data is output for distribution over network **107** at the next step 708. Alternatively, the question of step **706** is answered negatively, indicating that only generic data **306** is requested which does not require securing and control proceeds directly to said step **708,** such that said generic data is again output for distribution. Control proceeds to broadcasting step **712** further detailed hereinbelow.

If the previous question of step **705** is answered negatively, signifying that received remote user input data is not a broadcast request, control proceeds to a fourth question at step **709,** asking whether said received data includes secure user-specific data **307.** If the question of step **709** is answered positively, said received secure user-specific data **307** is decrypted and decoded at step **710** in order to be compared with locally-stored user-specific data for validation at step **711.** Control proceeds to broadcasting step **712** further detailed hereinbelow.

If the question of step **709** is answered negatively, received remote user input data is neither a broadcast request nor contains user-specific data to be validated but for instance simply a network-connection status indication, such as according to known keep-alive procedures and control proceeds to step **712.** At said step **712,** server **104** thus either broadcasts a simple acknowledgement signal according to said keep-alive procedure, generic data and/or secure user-specific data further to step **708** or acknowledgement data further to the comparing step **711.**

At step **713,** a last question is asked as to whether a user interrupt is received at server **104,** for instance in order to effect a terminal switch-off to carry out essential maintenance. If the question of step **713** is answered negatively, control proceeds to step **703,** wherein further network-connected user terminals may be logged in, user input data received and processed and so on. Alternatively, the question of step **713** is answered positively, whereby the application and database loaded at step **702** are stopped at step **714** and server **104** may be switched off at step **705.**

The contents of the memory **609** of terminal **104** are shown in Figure 8 further to carrying out the operating system, database and application loading step 702 and whilst application closing step **714** is not selected, i.e. at application run time.

Memory **609** first contains an operating system **801** as loaded according to step **702,** embodying the set of basic CPU instructions previously described in Figure 7. Memory **609** next contains a communications manager **802** also loaded according to step **902,** embodying the set of CPU instructions required to call upon the functionality of modem **611** and emit and receive network data.

Memory **609** also contains an application **803** as loaded according to step **902,** embodying the set of CPU instructions according to which distributed data processed by said application **803** and user-specific data referenced in database **804** are processed. Memory **609** preferably stores look-up tables at **805,** which will be further described below and with which application **803** secures and decodes user-specific data and distributed data.

Distributed data broadcast to any user terminal **101, 108, 109** or **110** at step **712** is shown at **806.** Distributed data received from any user terminal **101, 108, 109** or **110** at step **704** is shown at **807.** In a preferred embodiment of the present invention, an iteration of the secured user-specific data portion of data **806** is temporarily stored at 808 in order to be compared with user input **807** encapsulating said secured data at steps **710** and **711.**

The application **803** stored in memory **609** with which data is secured according to the present invention is further detailed in Figure 9. Application **803** includes a database interface, which extracts user-specific data **307** from database **804** for securing and subsequent broadcasting according to steps **707, 708, 712,** and comparing according to steps **710** and **711.**

Application **803** next includes a nybble encoding engine **902,** which encodes database-stored, user-specific data **307,** the purpose or meaning of which may be obvious, thus prone to user tampering, into nybble data with making use of a nybble mapping table stored at **805** in memory **609** and will be further described below. For the purpose of clarity, a unit of normal memory storage space amounts to a byte, measuring 8 bits. Each character of stored user-specific data **307** measures 8 bits in memory space without nybble encoding. Subsequent encryption outputs encrypted data strings as characters from a two hundred and fifty-six character alphabet. Representing characters from such an encrypted string in the normal "text" character set requires the use of two characters from the digits zero to nine and the letters 'a' to 'f (HEX characters) thus dramatically increasing the original data string size.

However, a nybble is half a byte, measuring 4 bits. Nybble encoding thus allows application **803** to halve the amount of memory storage space required for storing user-specific data **307** to be broadcast before encryption. Moreover, nybble-encoded user-specific data **307** simply takes a binary form, i.e. a sequence of zeros and ones, whereby said encryption has a much more restricted set of characters to encrypt. Application **803** thus also includes an encrypting engine **903** which, in the preferred embodiment of the present invention, performs the industry-standard 3DES symmetric encryption upon the nybble-encoded user-specific data **307.** Said 3DES symmetric encryption is provided herein by way of example only and it will be apparent to those skilled in the art that it is not limitative. Indeed, encrypting engine **903** may perform any other type of encryption upon the nybble-encoded user-specific data **307** and, in an alternative embodiment of the present invention, encrypting engine **903** performs the industry-standard AES symmetric encryption upon the nybble-encoded user-specific data **307.**

Application **803** finally includes a managing module **904,** which co-ordinates the output of interface **901** and engines **902, 903** and also outputs further securing variables such as a random value **905,** a time stamp **906** and a checksum **907** to be incorporated in the data string incorporating data **307** before nybble encoding, depending upon the bandwidth, memory and/or processing capacities of the receiving user terminal.

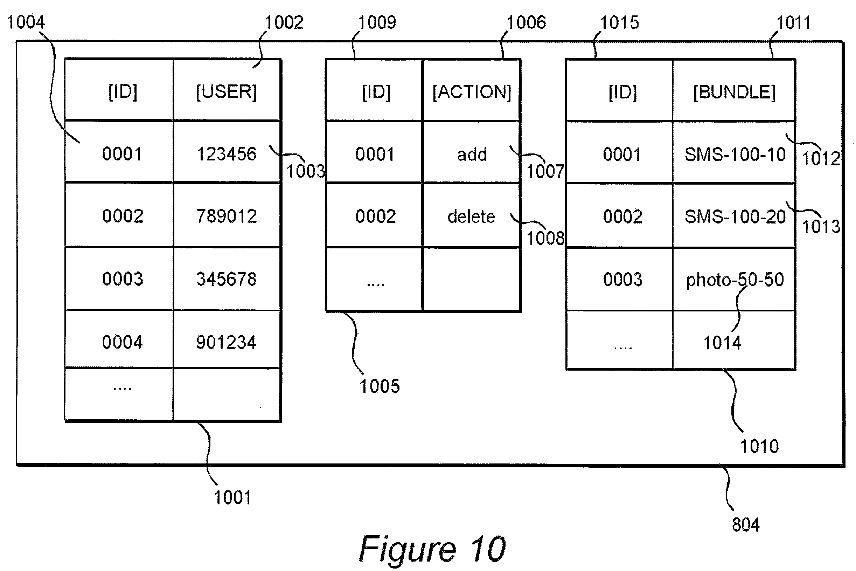

The database **804,** loaded at step **702** is further detailed in Figure10. In the example, database **804** is a relational database which stores data organised in tables. For the purpose of not unnecessarily obscuring the present description, only a few such tables will be described below, but it will be readily apparent to those skilled in the art that the present description is not limited thereto.

A first table **1001** stores user names **1002** which, as service provider **105** is a mobile phone services provider, are unique user phone numbers **1003.** Preferably, table **1001** is configured with a further unique reference **1004** for each of said unique phone numbers **1003,** which are examples of user-specific data **307.**

A second table **1005** stores user-selectable functions **1006** which, when so selected, allow a mobile phone user to edit her mobile phone account characteristics. Said functions **1006** include for instance an "add" function **1007** which, when user-selected, adds whichever new account characteristic to the existing service. Likewise, said functions **1006** include for instance a "delete " function **1008** which, when user-selected, removes whichever account characteristic from the existing service. Preferably, table 1005 is also configured with a further unique reference **1009** for each of said functions 1006.

A third table **1010** stores account characteristics **1011,** for instance the "SMS-100-10" bundle **1012** of the offer in the example, another, less advantageous SMS bundle **1013,** a photo-messaging bundle **1014** and so on. Preferably, table **1010** is also configured with a further unique reference **1015** for each of said functions **1006.**

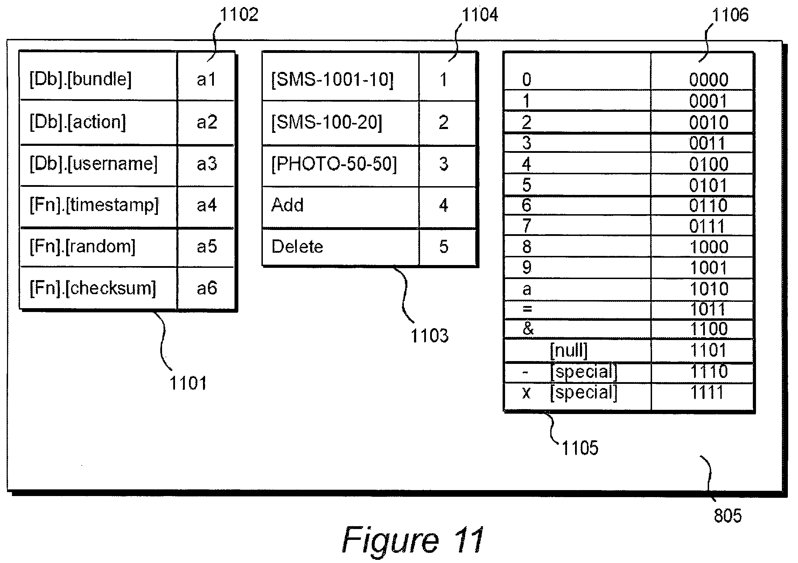

The look-up tables stored at **805** in memory **609** with which application **803** secures and compares data **307** according to steps **707** and **710, 711** respectively, are further detailed in Figure 11.

A first look-up table **1101** assigns a two-character string, comprising the letter 'a' and an integer **1102** to each of database-stored username field **1002,** user-selectable function field **1006,** account characteristic field **1011** and application-generated securing variables **905, 906, 907.** A first advantage of using LUT **1101** is to obscure the purpose of data that may appear obvious in un-encoded and/or un-encrypted form. Indeed, a user may not guess what "a1" signifies but would undoubtedly guess the meaning of "bundle". A second advantage of using said LUT **1101** is to dramatically reduce the memory space required to store the character string corresponding to any combination of the above data, functions, characteristics, variables and values thereof.

A second look-up table **1103** assigns a unique integer value **1104** to each of user-selectable function value **1007, 1008** and account characteristic value **1012, 1013, 1014.** A first advantage of using LUT **1103** is again to obscure the purpose of data that may appear obvious in un-encoded and/or un-encrypted form. Indeed, a user may not guess what "1" signifies but may guess the meaning of "SMS-100-10". A second advantage of using said LUT **1103** is again to dramatically reduce the memory space required to store the character string corresponding to any combination of the above functions and characteristics.

A third look-up table **1105** is the nybble mapping table used by nybble engine **902** of application **803** to encode user-specific data 307. In the preferred embodiment of the present invention, LUT **1105** maps four binary integers **1106** to each character of a sixteen character set **1107.** The advantage of using LUT **1105** is to dramatically reduce the memory space required to store the nybble-encoded character string corresponding to any combination of 2-character strings **1102,** unique integer values **1104** and other variables and values falling within the sixteen character set **1107,** as two nybble-encoded characters can be stored into one normal memory storage space (a byte).

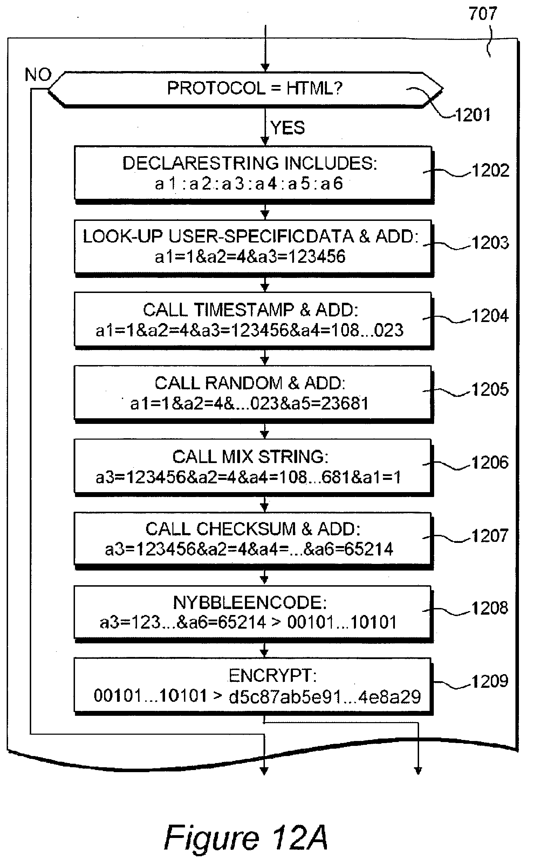

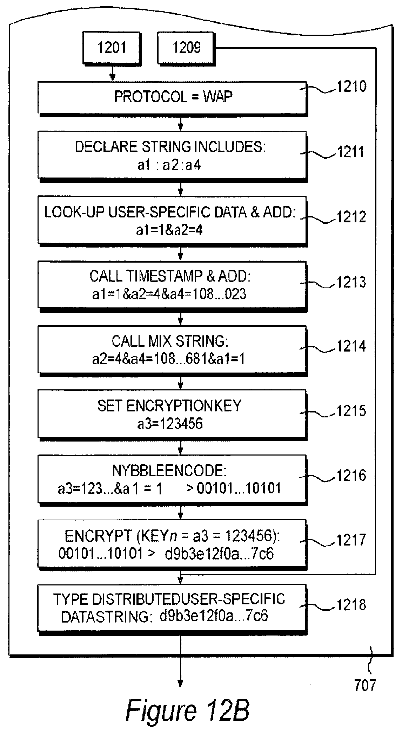

The step **707** of encoding user-specific data **307** with application **803** and the look-up tables **1101, 1103** and **1105** is described in further detail in Figures 12a and 12b.

A first question is asked at step 1201 in order to identify whether the distributed data processing protocol is HTML, which is described herein by way of example only and to which the present description is not limited. If the question of step **1201** is answered positively, then at step **1202** application **803** declares the components **1102** of the character string to be secured as all of the required user-specific data **1002, 1006, 1011** and all of the available securing variables **905, 906** and **907,** resulting in the longest possible character string to be secured, because the application has determined that the requesting remote user terminal has ample bandwidth, memory and processing means based upon the requirement for processing HTML. Application **803** thus declares said character string to include 2-character strings 'a1' through to 'a6', then at step **1203** calls the database interface 901 to fetch stored user-specific data values **1003, 1007** and **1012,** whereby said values are looked-up in LUT **1103** and replaced with respective integers **1104.**

At step **1204,** application 803 outputs a value for the timestamp 'a4', which is for instance the number of milliseconds since 01 January 1970, and confers a time-sensitivity to the user-specific data to be broadcast so as to make the offer self expire. At the next step **1205,** application **803** outputs a random value for the component 'a5', with the effect of removing any data pattern which a user may determine in certain substrings of said broadcast user-specific data if input parameters with only marginal differences are secured.

At the next step **1206,** application **803** performs a mixing function, having the effect of randomly placing pairs of components **1102** and their respective values within the total string output so far, since the order of said pairs is unimportant, thus as an added securing function. At the next step **1207,** application **803** performs an industry standard checksum (i.e. hash) function on the mixed string and outputs a value representative of said string. The same string will always produce the same checksum value, but a modification to the string will produce a completely different checksum and, advantageously it is not possible to determine the string from said checksum.

At step **1208,** application **803** calls nybble-encoding engine **902** to encode the string output from step **1207** with replacing each character therein with its corresponding nybble reference **1106,** as each of said character is advantageously included within the sixteen character set thereof. At step **1209,** application **803** passes the output of nybble encoding engine **902** to the encryption engine **903,** wherein the already meaningless string of binary integers is further encrypted.

As a result of performing steps **1202** to **1209,** distributed user-specific data **307,** which includes data **1003,** data **1007** which only the user identified by said data **1003** may perform upon her account and data **1012,** to which only said user may be entitled to, is totally meaningless to said user in unprocessed form, i.e. as a string of alpha numerical characters within an HTML-coded text file. Nonetheless, the length of said distributed user-specific data **307** as an encrypted string is now fairly large, typically amounting to one hundred and sixty characters which, on a low-capability device, is only marginally useable.

Alternatively, the question of step **1201** is answered negatively, whereby application 803 determines at step **1210** that the distributed data processing protocol is WAP, which is described herein by way of example only and to which the present description is not limited. At step **1211** application **803** declares component **1102** of the character string to be secured as all of the required user-specific data **1006, 1011** and only securing variable **906,** resulting in the shortest possible character string to be secured, because the application has determined that the requesting remote user terminal has limited bandwidth, memory and processing means based upon the requirement for processing WAP.

Application **803** thus declares said character string to include 2-character strings 'a1', 'a2' and 'a4' then at step **1212** calls the database interface **901** to fetch stored user-specific data values **1007** and **1012,** whereby said values are looked-up in LUT **1103** and replaced with respective integers **1104.** In the preferred embodiment of the present invention, the user name field and value **1002, 1003** are not required because handset **101** automatically logs into server **104** without user intervention upon powering-up. User authentication is thus not necessary, either to validate user account editing or simply to request user-specific data to be broadcast, as server **104** already knows the user/terminal it is serving.

At step **1213,** application **803** outputs a value for the timestamp 'a4' and again confers a time-sensitivity to the user-specific data to be broadcast so as to make the offer self expire. At the next step **1214,** application **803** again performs a mixing function, having the effect of randomly placing pairs of components **1102** and their respective values within the total string output so far, since the order of said pairs is unimportant and does not incur processing overhead, thus as an added securing function. At step **1215,** application **803** declares the user name value **1003** of the broadcast recipient as the basis of one of the 3DES encryption keys as an added securing step which, again, does not incur any significant processing overhead.

At step **1216,** application **803** calls nybble-encoding engine **902** to encode the string output from step **1215** with replacing each character therein with its corresponding nybble reference **1106,** as each of said character is advantageously included within the sixteen character set thereof. At step **1217,** application **803** passes the output of nybble encoding engine **902** to the encryption engine **903,** wherein the already meaningless string of binary integers is further encrypted: a system or device not configured with the corresponding encryption keys and lookup table would not be able to translate the string of binary values into anything meaningful.

As a result of performing steps **1211** to **1217,** distributed user-specific data **307,** which includes data **1007** which only the user identified by its device may perform upon her account and data **1012,** to which only said user may be entitled to, is totally meaningless to said user in unprocessed form, i.e. as a string of alpha numerical characters within a WML-coded text file. Nonetheless, the length of said distributed user-specific data **307** as an encrypted string is now very small, typically amounting to sixty four characters, as strings output by the 3DES encryption are divisible in length by 8, and more so by 16. At step **1218,** application **803** types the user-specific data **307** secured as a meaningless string of alphanumerical characters into the HTML- or WML-coded text file, subsequently output for distribution at step **708.**

The decrypting step **710** is further detailed in Figure 13. It was previously explained that distributed data takes the effective form of one single string of statements and values. At step **1301,** application **803** parses the user-specific data identified at step **709** to isolate the string encrypted according to steps **1202** to **1209** or **1211** to **1217,** which was broadcast to handset **101** according to step **712** and returned by said handset according to step **407.**

At step **1302,** application **803** calls the encryption engine **903** to reverse the encryption performed at step **1209** or **1217.** The resulting nybble-encoded, binary character string is then passed by application **803** to nybble engine **902** at the next step **1303** for similar reversion, i.e. wherein said engine translates each subsequent string of four binary characters into an alpha numerical character using LUT **1105.**

At step **1304** a question is asked as to whether the decoded string includes a checksum component 'a6' and value pair. If the question of step **1304** is answered positively, application **803** removes said pair from said decoded string at step **1305,** then at step **1306** performs a checksum function **(907)** upon the edited string of step **1305** and compares it with the removed checksum value of said step **1305,** in order to obtain a value match. Control then proceeds to the next step **1307,** as it would if the string did not contain a checksum component 'a6' and value pair and the question of step **1304** was answered negatively. At said step **1307,** the component and value pairs in the decoded string are checked for a match with those initially broadcast and stored in memory **609** at **808** in order to ensure no tampering took place, regardless of the user terminal-dependent size of the string.

The comparing step **711** is further described in Figure 14. A question is asked at step **1401,** as to whether all of the component and value pairs present in the decrypted string and processed according to step 1307 have been matched and the user input returned from the network connected user terminal, i.e. handset **101** in the example, is legitimate. If the question of step **1401** is answered positively, application **803** processes acknowledgement data for broadcast to said handset **101** at step **1402,** whereby said acknowledgement is broadcast according to step **712** and the user of handset **101** notified that her acceptance of the promotional offer has been received.

Alternatively, the question of step **1401** is answered negatively, signifying that at least one of the returned component and value pairs was not matched, for instance because the distributed user-specific data **307** secured according to steps **1202** to **1209** or steps **1211** to **1217** was tampered with or because of any network-borne data loss or corruption.

Control thus proceeds to step **1403,** wherein for any mismatched component and value pairs, application **803** isolates said mismatched component 'aX' reference and value thereof, which it subsequently processes into an error notice at step **1404** encapsulating said isolated data. At step **1405,** application **803** outputs said error notice locally, for instance on the VDU **602** by way of a pop-up window known to those skilled in the art, as well as process said error notice for broadcast to the remote user terminal, in a manner comparable to step **1402.** The user of handset **101** is therefore notified that her acceptance of the promotional offer, which may have been tampered locally, has been denied.

## Claims

1. An apparatus for distributing data, comprising network-connected user terminals (101, 104, 108), each of which includes at least processing means (205, 608), memory means (208, 609) and communicating means (209, 611), wherein said memory means (205, 609) stores data and instructions (803),
wherein at a first (104) of said user terminals said processing means (608) is configured by said instructions (803) to
encode said data;
encrypt said encoded data;
broadcast said encrypted data-to a second user terminal (101, 108) by way of said communication means (609);
said stored data comprises generic data and user-specific data (804) and said processing means (608) is further configured by said instructions (803) to
obtain the type of processing protocol for said distributed data at said second user terminal (101, 108);
encode said user-specific data (804) according to said protocol type;
encrypt said encoded user-specific data;
receive remote user input data (305) which is broadcast from said second user terminal (101) in response to receiving said encrypted data (808); and
decrypt and compare said remote user input (305) with said stored user-specific data (804) for validating said remote user input data (305);
**characterised in that** the processing means (608) is arranged to encode said user-specific data (307) by way of at least one nybble-mapping look-up table, wherein the encodied user-specific data (307) comprises binary characters each of which requires four bits of memory storage space.

2. An apparatus according to claim 1, wherein said instructions (803) generate further securing variables to be included in said encoded user-specific data, such as a random value (905) or a timestamp (906) or a checksum (907) of the character string or a combination thereof.

3. An apparatus according to claim 2, wherein said instructions further include instructions to remove said checksum (907) after decrypting said encoded user-specific data for validation against the calculated checksum of said decrypted encoded user-specific data.

4. An apparatus according to any of claims 1 to 3, wherein said processing means (205, 608) is further configured by said instructions (803) to use a portion of said user-specific data (804) as at least one encryption key.

5. An apparatus according to any of claims 1 to 4, wherein said received remote user input data (305) includes said encrypted user-specific data (808).

6. A method of securing distributed data, wherein said distributed data includes generic and user-specific data (804),
said method comprises the steps of:
obtaining the type of distributed data processing protocol of a second user terminal (101, 108) at a first user terminal (104), each of which is network-connected;
at said first terminal (104), storing said user-specific data and encoding said user-specific data (804) according to said protocol type;
encrypting said encoded data;
broadcasting said encrypted data (808) to said second terminal (101, 108);
at said first terminal (104), receiving remote user input data (305) broadcast from said second user terminal (101, 108) in response to receiving said encrypted data (808);
decrypting and comparing said remote user input data (305) with said stored user-specific data (804) for validating said remote user input data (305); and
**characterised by** encoding said user-specific data (804) by way of at least one nybble-mapping look-up table, wherein the encoded user-specific data (804) comprises binary characters each of which require four-bits of memory storage space.

7. A method according to claim 6, wherein said user-specific data (804) is encoded as a string of characters, the size of which varies in proportion with the bandwidth of said network (102, 107), the size of said memory means (208, 609) or the capacity of said processing means (205, 608) of said second terminal (101, 108).

8. A method according to claim 7, including the further step of including additional securing variables in said string of characters, such as a random value (905) or a timestamp (906) or a checksum (907) of the character string or a combination thereof.

9. A method according to claim 8, wherein said decrypting step further includes the step of removing said checksum (907) after decrypting said character string for validation against the calculated checksum of said decrypted character string.

10. A method according to any of claims 6 to 9, further including the step of setting a portion of said user-specific data (804) as at least one encryption key of said encryption algorithm.

11. A method according to any of claims 6 to 10, wherein said encrypted user-specific data (808) is broadcast as a meaningless string of alphanumerical characters, within data (305, 806) processed according to said protocol for output on a display (202, 602).

12. A method according to any of claims 6 to 11, wherein said received remote user input data (305) includes said encrypted user-specific data (808).

13. A computer system (104) programmed to execute stored instructions (803) such that in response to said stored instructions said system is configured to:
obtain the type of distributed data processing protocol of a remote user terminal (101, 108);
encode stored user-specific data (804) according to said protocol type;
encrypt said encoded data;
broadcast said encrypted data (808) to said remote user terminal (101, 108) by way of communication means (609);
receive remote user input data (305) broadcast from said remote user terminal (101, 108) in response to receiving said encrypted data (808); and
decrypt and compare said remote user input data (305) with said stored user-specific data (804) for validating said remote user input data (305); and **characterised in that** said instructions, further cause the system/device to encode said user-specific data by way of at least one nybble-mapping look-up table wherein the encoded user-specific data comprises binary characters each of which requires four bits of memory storage.

14. A data-carrying medium (815, 816) having instructions (803) stored thereon which, when processed by a data processing device (104), configure the device to:
obtain the type of distributed data processing protocol of a remote user terminal (101, 108);
encode stored user-specific data (804) according to said protocol type;
encrypt said encoded data with an encryption algorithm;
broadcast said encrypted data (808) to said remote user terminal (101, 108) by way of communication means (609);
receive remote user input data (305) broadcast from said remote user terminal (101, 108) in response to receiving said encrypted data (808);
decrypt and compare said remote user input data (305) with said stored user-specific data (804) for validating said remote user input data (305); and **characterised in that** said instructions, further cause the system/device to encode said user-specific data by way of at least one nybble-mapping look-up table wherein the encoded user-specific data comprises binary characters each of which requires four bits of memory storage.

15. A computer system programmed according to claim 13 or a data-carrying medium according to claim 14, wherein said computer system or said data processing device, respectively, is further configured to add securing variables in said string of characters, such as a random value (905) or a timestamp (906) or a checksum (907) of the character string or a combination thereof.

16. A computer system programmed according to any of claims 13 or 15, or a data-carrying medium according to any of claims 14 or 15, wherein said computer system or said data processing device, respectively, is further configured to set a portion of said user-specific data (804) as at least one encryption key of said encryption algorithm.

17. A method according to any of claims 6 to 12, wherein the size of said encoded user-specific data (804) varies in proportion to the bandwidth of said network (102, 107), the size of said memory means (208, 609) or the capacity of said processing means (205, 608) of said second terminal (101, 108).

18. A method according to any of claims 6 to 12 and 17, wherein said encrypted user-specific data (808) is broadcast as a meaningless string of alphanumerical characters, within data (305, 806) processed according to said protocol for output on a display (202, 602).

19. A method according to any of claims 6 to 12 and 17 or 18, wherein said remote terminal (101, 108) is wirelessly connected to said network (102, 107).

20. A method according to claim 17, embodied in the apparatus of any of claims 1 to 5, the programmed computer system of any of claims 13 and 15 or 16, or the data-carrying medium of any of claims 14 to 16.

21. A method according to claim 18, embodied in the apparatus of any of claims 1 to 5, the programmed computer system of any of claims 13, 15 or 6 and 20, or the data-carrying medium according to any of claims 14 to 16 and 20.

22. A method according to claim 19, embodied in the apparatus of any of claims 5 to 20, the programmed computer system of any of claims 13, 15 or 16 and 20 or 21, or the data-carrying medium according to any of claims 14 to 16 and 20 or 21.

## Patentansprüche

1. Vorrichtung zum Verteilen von Daten, die vernetzte Benutzerterminals (101, 104, 108) umfasst, die jeweils wenigstens Verarbeitungsmittel (205, 608), Speichermittel (208, 609) und Kommunikationsmittel (209, 611) umfassen, wobei das genannte Speichermittel (205, 609) Daten und Befehle (803) speichert,
wobei an einem ersten (104) der genannten Benutzerterminals das genannte Verarbeitungsmittel (608) durch die genannten Befehle (803) konfiguriert wird zum:
Codieren der genannten Daten;
Verschlüsseln der genannten codierten Daten;
Rundsenden der genannten verschlüsselten Daten zu einem zweiten Benutzerterminal (101, 108) über das genannte Kommunikationsmittel (609);
die genannten gespeicherten Daten umfassen generische Daten und benutzerspezifische Daten (804) und das genannte Verarbeitungsmittel (608) wird durch die genannten Befehle (803) weiter konfiguriert zum:
Einholen des Verarbeitungsprotokolltyps für die genannten verteilten Daten an dem genannten zweiten Benutzerterminal (101, 108);
Codieren der genannten benutzerspezifischen Daten (804) gemäß dem genannten Protokolltyp;
Verschlüsseln der genannten codierten benutzerspezifischen Daten; Empfangen von von dem genannten zweiten Benutzerterminal (101) als Reaktion auf den Empfang der genannten verschlüsselten Daten (808) rundgesendeten Fernbenutzereingabedaten (305); und
Entschlüsseln und Vergleichen der genannten Fernbenutzereingabedaten (305) mit den genannten gespeicherten benutzerspezifischen Daten (804) zum Validieren der genannten Fernbenutzereingabedaten (305);
**dadurch gekennzeichnet, dass** das Verarbeitungsmittel (608) zum Codieren der genannten benutzerspezifischen Daten (307) über wenigstens eine Nybble-Mapping-Nachschlagtabelle ausgelegt ist, wobei die codierten [*sic*] benutzerspezifischen Daten (307) binäre Zeichen umfassen, die jeweils vier Bits Memory-Speicherplatz benötigen.

2. Vorrichtung nach Anspruch 1, wobei die genannten Befehle (803) weitere Sicherheitsvariablen erzeugen, die in die genannten codierten benutzerspezifischen Daten einzubeziehen sind, wie zum Beispiel einen Zufallswert (905) oder einen Zeitstempel (906) oder eine Prüfsumme (907) der Zeichenfolge oder eine Kombination davon.

3. Vorrichtung nach Anspruch 2, wobei die genannten Befehle ferner Befehle zum Entfernen der genannten Prüfsumme (907) nach dem Entschlüsseln der genannten codierten benutzerspezifischen Daten zum Validieren anhand der berechneten Prüfsumme der genannten entschlüsselten codierten benutzerspezifischen Daten beinhalten.

4. Vorrichtung nach einem der Ansprüche 1 bis 3, wobei das genannte Verarbeitungsmittel (205, 608) ferner von den genannten Befehlen (803) zum Benutzen eines Teils der genannten benutzerspezifischen Daten (804) als wenigstens ein Verschlüsselungsschlüssel konfiguriert ist.

5. Vorrichtung nach einem der Ansprüche 1 bis 4, wobei die genannten empfangenen Fernbenutzereingabedaten (305) die genannten verschlüsselten benutzerspezifischen Daten (808) beinhalten.

6. Verfahren zum Sichern von verteilten Daten, wobei die genannten verteilten Daten generische und benutzerspezifische Daten (804) beinhalten,
wobei das genannte Verfahren die folgenden Schritte beinhaltet:
Einholen des Verarbeitungsprotokolltyps für die verteilten Daten eines zweiten Benutzerterminals (101, 108) an einem ersten Benutzerterminal (104), die jeweils vernetzt sind;
Speichern, an dem genannten ersten Terminal (104), der genannten benutzerspezifischen Daten und Codieren der genannten benutzerspezifischen Daten (804) gemäß dem genannten Protokolltyp;
Verschlüsseln der genannten codierten Daten;
Rundsenden der genannten verschlüsselten Daten (808) zu dem genannten zweiten Terminal (101, 108);
Empfangen, an dem genannten ersten Terminal (104), von von dem genannten zweiten Benutzerterminal (101, 108) rundgesendeten Fernbenutzereingabedaten (305) als Reaktion auf den Empfang der genannten verschlüsselten Daten (808);
Entschlüsseln und Vergleichen der genannten Fernbenutzereingabedaten (305) mit den genannten gespeicherten benutzerspezifischen Daten (804) zum Validieren der genannten Fernbenutzereingabedaten (305); und
**gekennzeichnet durch** Codieren der genannten benutzerspezifischen Daten (804) über wenigstens eine Nybble-Mapping-Nachschlagtabelle, wobei die codierten benutzerspezifischen Daten (804) binäre Zeichen umfassen, die jeweils vier Bits Memory-Speicherplatz benötigen.

7. Verfahren nach Anspruch 6, wobei die genannten benutzerspezifischen Daten (804) als eine Folge von Zeichen codiert werden, deren Größe proportional zur Bandbreite des genannten Netzwerks (102, 107), der Größe des genannten Speichermittels (208, 609) oder der Kapazität des genannten Verarbeitungsmittels (205, 608) des genannten zweiten Terminals (101, 108) variiert.

8. Verfahren nach Anspruch 7, das den weiteren Schritt des Einschließens zusätzlicher Sicherheitsvariablen in die genannte Zeichenfolge beinhaltet, wie zum Beispiel einen Zufallswert (905) oder einen Zeitstempel (906) oder eine Prüfsumme (907) der Zeichenfolge oder eine Kombination davon.

9. Verfahren nach Anspruch 8, wobei der genannte Entschlüsselungsschritt ferner den Schritt des Entfernens der genannten Prüfsumme (907) nach dem Entschlüsseln der genannten Zeichenfolge zum Validieren anhand der berechneten Prüfsumme der genannten entschlüsselten Zeichenfolge beinhaltet.

10. Verfahren nach einem der Ansprüche 6 bis 9, das ferner den Schritt des Setzens eines Teils der genannten benutzerspezifischen Daten (804) als wenigstens ein Verschlüsselungsschlüssel des genannten Verschlüsselungsalgorithmus beinhaltet.

11. Verfahren nach einem der Ansprüche 6 bis 10, wobei die genannten verschlüsselten benutzerspezifischen Daten (808) als eine bedeutungslose Folge von alphanumerischen Zeichen innerhalb von gemäß dem genannten Protokoll zur Ausgabe an ein Display (202, 602) verarbeiteten Daten (305, 806) rundgesendet werden.

12. Verfahren nach einem der Ansprüche 6 bis 11, wobei die genannten empfangenen Fernbenutzereingabedaten (305) die genannten verschlüsselten benutzerspezifischen Daten (808) beinhalten.

13. Computersystem (104), programmiert zum Ausführen von gespeicherten Befehlen (803), so dass das genannte System als Reaktion auf die genannten gespeicherten Befehle konfiguriert ist zum:
Einholen des Verarbeitungsprotokolltyps für verteilte Daten eines Fernbenutzerterminals (101, 108);
Codieren von gespeicherten benutzerspezifischen Daten (804) gemäß dem genannten Protokolltyp;
Verschlüsseln der genannten codierten Daten;
Rundsenden der genannten verschlüsselten Daten (808) zu dem genannten Fernbenutzerterminal (101, 108) mit dem Kommunikationsmittel (609);
Empfangen von von dem genannten Fernbenutzerterminal (101, 108) als Reaktion auf den Empfang der genannten verschlüsselten Daten (808) rundgesendeten Fernbenutzereingabedaten (305); und
Entschlüsseln und Vergleichen der genannten Fernbenutzereingabedaten (305) mit den genannten gespeicherten benutzerspezifischen Daten (804) zum Validieren der genannten Fernbenutzereingabedaten (305); und **dadurch gekennzeichnet, dass** die genannten Befehle ferner bewirken, dass das System/Gerät die genannten benutzerspezifischen Daten mittels wenigstens einer Nybble-Mapping-Nachschlagtabelle codieren, wobei die genannten codierten benutzerspezifischen Daten binäre Zeichen umfassen, die jeweils vier Bits Memory-Speicher benötigen.

14. Datentragendes Medium (815, 816), auf dem Befehle (803) gespeichert sind, die bei Verarbeitung durch ein Datenverarbeitungsgerät (104) das Gerät konfigurieren zum:
Einholen des Verarbeitungsprotokolltyps für verteilte Daten eines Fernbenutzerterminals (101, 108);
Codieren von gespeicherten benutzerspezifischen Daten (804) gemäß dem genannten Protokolltyp;
Verschlüsseln der genannten codierten Daten mit einem Verschlüsselungsalgorithmus;
Rundsenden der genannten verschlüsselten Daten (808) zu dem genannten Fernbenutzerterminal (101, 108) mit dem Kommunikationsmittel (609);
Empfangen von von dem genannten Fernbenutzerterminal (101, 108) als Reaktion auf den Empfang der genannten verschlüsselten Daten (808) rundgesendeten Fernbenutzereingabedaten (305); und
Entschlüsseln und Vergleichen der genannten Fernbenutzereingabedaten (305) mit den genannten gespeicherten benutzerspezifischen Daten (804) zum Validieren der genannten Fernbenutzereingabedaten (305); und **dadurch gekennzeichnet, dass** die genannten Befehle ferner bewirken, dass das System/Gerät die genannten benutzerspezifischen Daten mittels wenigstens einer Nybble-Mapping-Nachschlagtabelle codieren, wobei die codierten benutzerspezifischen Daten binäre Zeichen umfassen, die jeweils vier Bits Memory-Speicher benötigen.

15. Computersystem, programmiert gemäß Anspruch 13, oder datentragendes Medium nach Anspruch 14, wobei das genannte Computersystem bzw. das genannte Datenverarbeitungsgerät ferner konfiguriert ist zum Hinzufügen von Sicherheitsvariablen zu der genannten Zeichenfolge, wie z.B. einen Zufallswert (905) oder einen Zeitstempel (906) oder eine Prüfsumme (907) der Zeichenfolge oder eine Kombination davon.

16. Computersystem, programmiert nach Anspruch 13 oder 15, oder datentragendes Medium nach Anspruch 14 oder 15, wobei das genannte Computersystem bzw. das genannte Datenverarbeitungsgerät ferner zum Setzen eines Teils der genannten benutzerspezifischen Daten (804) als wenigstens ein Verschlüsselungsschlüssel des genannten Verschlüsselungsalgorithmus konfiguriert ist.

17. Verfahren nach einem der Ansprüche 6 bis 12, wobei die Größe der genannten codierten benutzerspezifischen Daten (804) proportional zur Bandbreite des genannten Netzwerks (102, 107), der Größe des genannten Speichermittels (208, 609) oder der Kapazität des genannten Verarbeitungsmittels (205, 608) des genannten zweiten Terminals (101, 108) variiert.

18. Verfahren nach einem der Ansprüche 6 bis 12 und 17, wobei die genannten verschlüsselten benutzerspezifischen Daten (808) als eine bedeutungslose Folge von alphanumerischen Zeichen innerhalb von gemäß dem genannten Protokoll zur Ausgabe auf einem Display (202, 602) verarbeiteten Daten (305, 806) rundgesendet werden.

19. Verfahren nach einem der Ansprüche 6 bis 12 und 17 oder 18, wobei das genannte Fernterminal (101, 108) drahtlos mit dem genannten Netzwerk (102, 107) verbunden ist.

20. Verfahren nach Anspruch 17, das in der Vorrichtung nach einem der Ansprüche 1 bis 5, dem programmierten Computersystem nach einem der Ansprüche 13 und 15 oder 16 oder dem datentragenden Medium nach einem der Ansprüche 14 bis 16 ausgestaltet ist.

21. Verfahren nach Anspruch 18, das in der Vorrichtung nach einem der Ansprüche 1 bis 5, dem programmierten Computersystem nach den Ansprüchen 13, 15 oder 6 und 20 oder dem datentragenden Medium nach einem der Ansprüche 14 bis 16 und 20 ausgestaltet ist.

22. Verfahren nach Anspruch 19, ausgestaltet in der Vorrichtung nach einem der Ansprüche 5 bis 20, dem programmierten Computersystem nach einem der Ansprüche 13, 15 oder 16 und 20 oder 21 oder dem datentragenden Medium nach einem der Ansprüche 14 bis 16 und 20 oder 21.

## Revendications

1. Appareil destiné à distribuer des données, comprenant des terminaux d'utilisateur connectés au réseau (101, 104, 108), dont chacun inclut au moins des moyens de traitement (205, 608), des moyens à mémoire (208, 609) et des moyens de communication (209, 611), cas dans lequel lesdits moyens à mémoire (205, 609) stockent des données et des instructions (803),
cas dans lequel, au niveau d'un premier terminal (104) parmi lesdits terminaux d'utilisateur, lesdits moyens de traitement (608) sont configurés par lesdites instructions (803) de façon à :
coder lesdites données ;
crypter lesdites données codées ;
diffuser lesdites données cryptées à un deuxième terminal d'utilisateur (101, 108) par l'intermédiaire desdits moyens de communication (609) ;
lesdites données stockées comprenant des données génériques et des données spécifiques à l'utilisateur (804), et lesdits moyens de traitement (608) étant configurés en outre par lesdites instructions (803) de façon à :
obtenir le type de protocole de traitement pour lesdites données distribuées, au niveau dudit deuxième terminal d'utilisateur (101, 108) ;
coder lesdites données spécifiques à l'utilisateur (804) conformément audit type de protocole ;
crypter lesdites données codées spécifiques à l'utilisateur ;
recevoir des données d'entrée d'utilisateur distant (305), qui sont diffusées à partir dudit deuxième terminal d'utilisateur (101), en réaction à la réception desdites données cryptées (808) ; et
décrypter et comparer ladite entrée d'utilisateur distant (305) avec lesdites données stockées spécifiques à l'utilisateur (804) afin de valider lesdites données d'entrée d'utilisateur distant (305) ;
**caractérisé en ce que** les moyens de traitement (608) sont agencés de façon à coder lesdites données spécifiques à l'utilisateur (307) par l'intermédiaire d'au moins une table de consultation à mappage de quartets, cas dans lequel les données codées spécifiques à l'utilisateur (307) comportent des caractères binaires dont chacun nécessite quatre bits en termes d'espace de stockage en mémoire.

2. Appareil selon la revendication 1, lesdites instructions (803) générant en outre des variables de sécurisation destinées à être incluses dans lesdites données codées spécifiques à l'utilisateur, par exemple une valeur aléatoire (905) ou un horodatage (906) ou un total de contrôle (907) de la chaîne de caractères ou une combinaison de ceux-ci.

3. Appareil selon la revendication 2, lesdites instructions incluant en outre des instructions destinées à enlever ledit total de contrôle (907), après le décryptage desdites données codées spécifiques à l'utilisateur, en vue d'une validation par rapport au total calculé desdites données décryptées et codées spécifiques à l'utilisateur.

4. Appareil selon l'une quelconque des revendications 1 à 3, lesdits moyens de traitement (205, 608) étant configurés en outre par lesdites instructions (803) de façon à utiliser une portion desdites données spécifiques à l'utilisateur (804) en tant qu'au moins une clé de cryptage.

5. Appareil selon l'une quelconque des revendications 1 à 4, lesdites données d'entrée d'utilisateur distant (305) ayant été reçues incluant lesdites données cryptées spécifiques à l'utilisateur (808).

6. Procédé destiné à sécuriser des données distribuées, lesdites données distribuées incluant des données génériques et spécifiques à l'utilisateur (804),
ledit procédé comprenant les étapes consistant à :
obtenir le type de protocole de traitement de données distribuées d'un deuxième terminal d'utilisateur (101, 108) au niveau d'un premier terminal d'utilisateur (104), chacun étant connecté au réseau ;
au niveau dudit premier terminal (104), stocker lesdites données spécifiques à l'utilisateur, et coder lesdites données spécifiques à l'utilisateur (804) conformément audit type de protocole ;
crypter lesdites données codées ;
diffuser lesdites données cryptées (808) audit deuxième terminal (101, 108) ;
au niveau dudit premier terminal (104), recevoir des données d'entrée d'utilisateur distant (305) diffusées à partir dudit deuxième terminal d'utilisateur (101, 108) en réaction à la réception desdites données cryptées (808) ;
décrypter et comparer lesdites données d'entrée d'utilisateur distant (305) avec lesdites données stockées spécifiques à l'utilisateur (804) afin de valider lesdites données d'entrée d'utilisateur distant (305) ; et
**caractérisé par** le codage desdites données spécifiques à l'utilisateur (804) par l'intermédiaire d'au moins une table de consultation à mappage de quartets, cas dans lequel les données codées spécifiques à l'utilisateur (804) comportent des caractères binaires dont chacun nécessite quatre bits en termes d'espace de stockage en mémoire.

7. Procédé selon la revendication 6, lesdites données codées spécifiques à l'utilisateur (804) étant codées en tant que chaîne de caractères, dont la taille varie en proportion avec la bande passante dudit réseau (102, 107), la taille desdits moyens à mémoire (208, 609) ou la capacité desdits moyens de traitement (205, 608) dudit deuxième terminal (101, 108).

8. Procédé selon la revendication 7, incluant l'étape supplémentaire consistant à inclure des variables de sécurisation additionnelles dans ladite chaîne de caractères, par exemple une valeur aléatoire (905) ou un horodatage (906) ou un total de contrôle (907) de la chaîne de caractères ou une combinaison de ceux-ci.

9. Procédé selon la revendication 8, ladite étape de décryptage incluant en outre l'étape consistant à enlever ledit total de contrôle (907), après le décryptage de ladite chaîne de caractères, en vue d'une validation par rapport au total calculé de ladite chaîne de caractères décryptée.

10. Procédé selon l'une quelconque des revendications 6 à 9, incluant en outre l'étape consistant à définir une portion desdites données spécifiques à l'utilisateur (804) en tant qu'au moins une clé de cryptage dudit algorithme de cryptage.

11. Procédé selon l'une quelconque des revendications 6 à 10, lesdites données cryptées spécifiques à l'utilisateur (808) étant diffusées en tant que chaîne de caractères alphanumériques sans aucun sens, au sein de données (305, 806) traitées conformément audit protocole pour être présentées sur un affichage (202, 602).

12. Procédé selon l'une quelconque des revendications 6 à 11, lesdites données d'entrée d'utilisateur distant (305) ayant été reçues incluant lesdites données cryptées spécifiques à l'utilisateur (808).

13. Système informatique (104) programmé pour exécuter des instructions stockées (803) de sorte qu'en réaction auxdites instructions stockées, ledit système est configuré de façon à :
obtenir le type de protocole de traitement de données distribuées pour un terminal d'utilisateur distant (101, 108) ;
coder des données stockées spécifiques à l'utilisateur (804) conformément audit type de protocole ;
crypter lesdites données codées ;
diffuser lesdites données cryptées (808) vers ledit terminal d'utilisateur distant (101, 108) par l'intermédiaire de moyens de communication (609) ;
recevoir des données d'entrée d'utilisateur distant (305) diffusées à partir dudit terminal d'utilisateur distant (101, 108) en réaction à la réception desdites données cryptées (808) ; et
décrypter et comparer lesdites données d'entrée d'utilisateur distant (305) avec lesdites données stockées spécifiques à l'utilisateur (804) afin de valider lesdites données d'entrée d'utilisateur distant (305) ; et **caractérisé en ce que** lesdites instructions obligent en outre le système / le dispositif à coder lesdites données spécifiques à l'utilisateur par l'intermédiaire d'au moins une table de consultation à mappage de quartets, cas dans lequel les données codées spécifiques à l'utilisateur comportent des caractères binaires dont chacun nécessite quatre bits en termes d'espace de stockage en mémoire.

14. Support porteur de données (815, 816) possédant des instructions (803) qui sont stockées sur celui-ci, ces instructions lorsqu'elles sont traitées par un dispositif de traitement de données (104) configurant le dispositif de façon à :
obtenir le type de protocole de traitement de données distribuées pour un terminal d'utilisateur distant (101, 108) ;
coder des données stockées spécifiques à l'utilisateur (804) conformément audit type de protocole ;
crypter lesdites données codées à l'aide d'un algorithme de cryptage ;
diffuser lesdites données cryptées (808) vers ledit terminal d'utilisateur distant (101, 108) par l'intermédiaire de moyens de communication (609) ;
recevoir des données d'entrée d'utilisateur distant (305) diffusées à partir dudit terminal d'utilisateur distant (101, 108) en réaction à la réception desdites données cryptées (808) ;
décrypter et comparer lesdites données d'entrée d'utilisateur distant (305) avec lesdites données stockées spécifiques à l'utilisateur (804) afin de valider lesdites données d'entrée d'utilisateur distant (305) ; et **caractérisé en ce que** lesdites instructions obligent en outre le système / le dispositif à coder lesdites données spécifiques à l'utilisateur par l'intermédiaire d'au moins une table de consultation à mappage de quartets, cas dans lequel les données codées spécifiques à l'utilisateur comportent des caractères binaires dont chacun nécessite quatre bits en termes d'espace de stockage en mémoire.

15. Système informatique programmé selon la revendication 13, ou support porteur de données selon la revendication 14, ledit système informatique ou ledit dispositif de traitement de données, respectivement, étant configuré en outre de façon à ajouter des variables de sécurisation dans ladite chaîne de caractères, par exemple une valeur aléatoire (905) ou un horodatage (906) ou un total de contrôle (907) de la chaîne de caractères ou une combinaison de ceux-ci.

16. Système informatique programmé selon l'une quelconque des revendications 13 ou 15, ou support porteur de données selon l'une quelconque des revendications 14 ou 15, ledit système informatique ou ledit dispositif de traitement de données, respectivement, étant configuré en outre de façon à définir une portion desdites données spécifiques à l'utilisateur (804) en tant qu'au moins une clé de cryptage dudit algorithme de cryptage.

17. Procédé selon l'une quelconque des revendications 6 à 12, la taille desdites données codées spécifiques à l'utilisateur (804) variant en proportion avec la bande passante dudit réseau (102, 107), la taille desdits moyens à mémoire (208, 609) ou la capacité desdits moyens de traitement (205, 608) dudit deuxième terminal (101, 108).

18. Procédé selon l'une quelconque des revendications 6 à 12 et 17, lesdites données cryptées spécifiques à l'utilisateur (808) étant diffusées en tant que chaîne de caractères alphanumériques sans aucun sens, au sein de données (305, 806) traitées conformément audit protocole pour être présentées sur un affichage (202, 602).

19. Procédé selon l'une quelconque des revendications 6 à 12 et 17 ou 18, ledit terminal distant (101, 108) étant connecté en mode sans fil audit réseau (102, 107).

20. Procédé selon la revendication 17, concrétisé dans l'appareil selon l'une quelconque des revendications 1 à 5, le système informatique programmé selon l'une quelconque des revendications 13, 15 ou 16, ou le support porteur de données selon l'une quelconque des revendications 14 à 16.

21. Procédé selon la revendication 18, concrétisé dans l'appareil selon l'une quelconque des revendications 1 à 5, le système informatique programmé selon l'une quelconque des revendications 13, 15 ou 6 et 20, ou le support porteur de données selon l'une quelconque des revendications 14 à 16 et 20.

22. Procédé selon la revendication 19, concrétisé dans l'appareil selon l'une quelconque des revendications 5 à 20, le système informatique programmé selon l'une quelconque des revendications 13, 15 ou 16 et 20 ou 21, ou le support porteur de données selon l'une quelconque des revendications 14 à 16 et 20 ou 21.
